(19) Europäisches Patentamt
European Patent Office
Office européen des brevets

(11) Veröffentlichungsnummer: **0 224 770 B1**

(12) **EUROPÄISCHE PATENTSCHRIFT**

(45) Veröffentlichungstag der Patentschrift: **24.04.91**

(51) Int. Cl.5: **B23B 31/02**

(21) Anmeldenummer: **86115783.2**

(22) Anmeldetag: **13.11.86**

(54) **Schnellwechsel-Einspannvorrichtung.**

(30) Priorität: **26.11.85 DE 8533253 U**

(43) Veröffentlichungstag der Anmeldung:
**10.06.87 Patentblatt 87/24**

(45) Bekanntmachung des Hinweises auf die Patenterteilung:
**24.04.91 Patentblatt 91/17**

(84) Benannte Vertragsstaaten:
**AT CH DE FR GB IT LI SE**

(56) Entgegenhaltungen:
**EP-A- 0 125 434**
**DE-C- 3 108 439**
**DE-U- 8 533 253**
**US-A- 2 162 359**
**US-A- 3 301 108**
**US-A- 3 469 871**
**US-A- 4 228 705**
**US-A- 4 322 190**

(73) Patentinhaber: **Hertel Aktiengesellschaft Werkzeuge + Hartstoffe**
**Wehlauer Strasse 71-73**
**W-8510 Fürth(DE)**

(72) Erfinder: **Glaser, Franz**
**Stadtweg 29**
**W-8500 Nürnberg(DE)**

(74) Vertreter: **Tergau, Enno, Dipl.-Ing. et al**
**Tergau & Pohl Patentanwälte Hefnersplatz 3**
**Postfach 119347**
**W-8500 Nürnberg 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft eine Schnellwechsel-Einspannvorrichtung mit den im Oberbegriff des Anspruches 1 aufgeführten Merkmalen.

Bei der eingangs genannten, aus EP-A-0125434 bekannten Einspannvorrichtung ist das Spindelende mittels eines Zapfens in eine Hülse des Werkzuegkopfes eingesetzt. Der Zapfen des Spindelendes enthält einen in einer radialen Ebene zur Spindelachse ausgerichteten Verbindungsbolzen mit beiderseits kegelstumpfartigen Enden, die über den Spindelendezapfen radial nicht hinausstehen. Den beiden Enden des Verbindungsbolzens gegenüberliegend sind in der Wandung der Werkzeugkopfhülse zwei in radialer Richtung verschraubbare Halteschrauben angeordnet, die in ihrem radial inneren Bereich jeweils kegelförmige, mit den Kegelstumpfenden des Verbindungsbolzens korrespondierende Ausnehmungen aufweisen. Durch Eindrehen der beiden Halteschrauben nach innen gelangen die Kegelstumpfenden des Verbindungsbolzens und die kegelförmigen Ausnehmungen in gegenseitige Anlage und bewirken ein in axialer Richtung erfolgendes Aneinanderpressen von Werkzeugkopf und Spindelende.

Bei der bekannten Einspannvorrichtung besteht die Notwendigkeit, beide einander diametral gegenüberliegenden Halteschrauben betätigen zu müssen. Außerdem besteht lediglich eine Zweipunktanlage zwischen Spindel und Werkzeugkopf. Der Erfindung liegt die Aufgabe zugrunde, eine Einspannvorrichtung der eingangs genannten Art hinsichtlich ihrer Wirksamkeit und Bedienbarkeit zu verbessern bzw. zu vereinfachen. Die Lösung dieser Aufgabe ist Gegenstand der im Kennzeichen des Anspruches 1 aufgeführten Merkmale.

Durch die Erfindung ist es möglich, eine Verkeilung zwischen Spindel und Werkzeugkopf über mehr als zwei Keilelemente, insbesondere in statisch bestimmter Weise über drei gleichmäßig über den Umfang verteilte Keilelemente vorzunehmen, die sämtlich durch die Bewegung nur eines einzigen Steuerschiebers in ihre Keilstellung überführt werden. Wenn hier davon die Rede ist, daß das Spindelende in eine Werkzeugkopfhülse hineinragt, so ist es durchaus auch umgekehrt denkbar, daß der Werkzeugkopf mit einem Zapfen in eine Hülse des Spindelendes eintaucht. Durch das Kennzeichnungsmerkmal des Anspruches 2 wird die Leichtgängigkeit der Einspannvorrichtung begünstigt. Durch die konstruktive Ausbildung des Steuerkeiles läßt sich eine besonders einfache Spannung des Werkzeugkopfes durchführen. Der Steuerkeil braucht lediglich von einer Außenseite her radial in seine Keilstellung eingetrieben zu werden, in der er weitgehend selbsthemmend haftet. Die Werkzeugkopfhülse wird lediglich von einer radialen Durchtrittsbohrung zur Einführung des Steuerkeiles durchsetzt.

Der Gegenstand der Erfindung wird anhand eines in den Figuren dargestellten Ausführungsbeispieles näher erläutert. Es zeigen:

Fig. 1 einen Vertikalschnitt durch die Einspannvorrichtung,

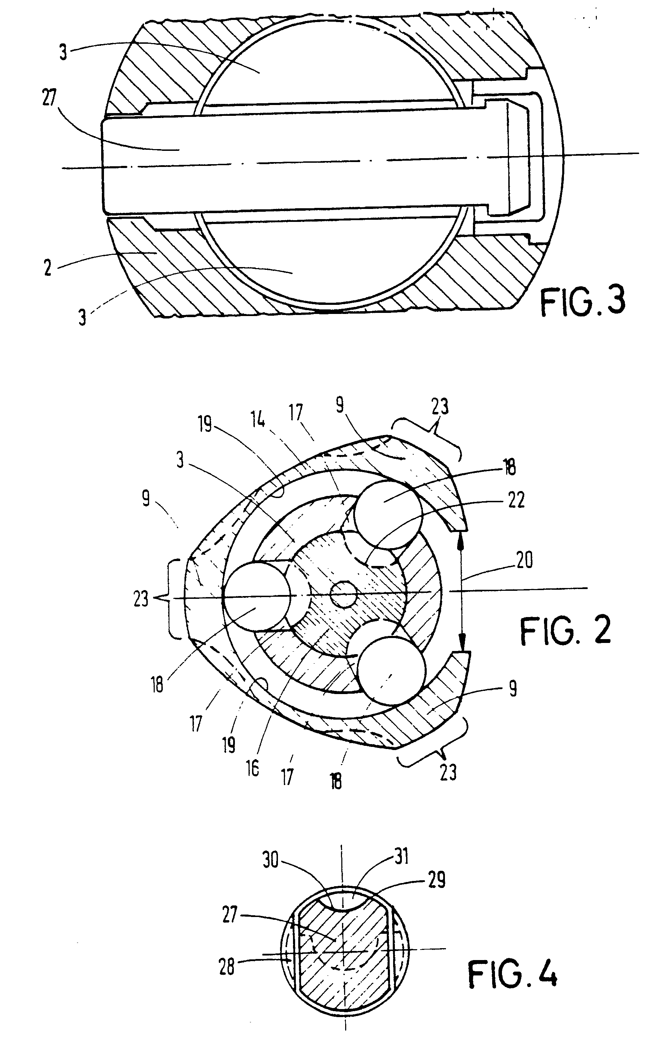

Fig. 2 einen Querschnitt entsprechend der Linie II-II in Fig. 1,
Fig. 3 einen Schnitt entsprechend der Linie III-III in Fig. 1,
Fig. 4 eine Frontansicht des Steuerkeils gemäß Pfeilrichtung IV in Fig. 1.

Die Schnellwechsel-Einspannvorrichtung enthält im wesentlichen die Maschinenspindel 1 und den drehfest in Axialrichtung auf das Spindelende 3 aufsetzbaren Werkzeugkopf. Am Spindelende 3 und an der dieses umgebenden Werkzeugkopfhülse 4 sind radial neben der Spindelachse 5 einen spitzen, sich zur Maschinenseite 6 hin schließenden und mit seinem Scheitel 7 etwa auf der Spindelachse 5 liegenden Winkel 8 bildende innere Keilflächen 9 und äußere Keilflächen 10 angeordnet. Die inneren Keilflächen 9 sind in radialer Richtung mit den äußeren Keilflächen 10 verspannbar. Sie pressen dadurch in axialer Richtung Werkzeugkopf 2 und Spindelende 3 gegeneinander.

Die Spindel 1 ist mit einem Flansch 11 fest verbunden, der an seiner vorderen Stirnfläche mit einer Hirth-Verzahnung 12 versehen ist. Die Verzahnung 12 greift in eine entsprechende Hirth-Verzahnung 13 am oberen Stirnende der Werkzeugkopfhülse 4 und stellt dadurch die Drehfestigkeit zwischen Maschinenspindel 1 und Werkzeugkopf 2 her.

Die radial inneren Keilflächen 9 sind am Umfang eines spreizbaren Ringelements 14 angeordnet. Das Ringelement 14 liegt in ungespreiztem Zustand in einer das Spindelende 3 umgebenden Ringnut 15 eingetaucht ein. In der Maschinenspindel 1 ist ein Steuerschieber 16 durch eine von außen eingeleitete Verstellbewegung in Richtung der Spindelachse 5 verschiebbar gelagert. Das Spindelende 3 ist von drei in die Ringnut 15 radial ausmündenden Öffnungen 17 durchsetzt, in der jeweils eine Kugel 18 einliegt. Die Kugeln 18 bilden jeweils ein Spreizelement, welches durch Axialverschiebung des Steuerschiebers 16 radial nach außen gegen die Innenringwand 19 des Ringelementes 14 gedrängt werden und dieses infolge seiner Schlitzung 20 aufweiten. Zu diesem Zweck ist auf dem Umfang des Steuerschiebers 16 eine der Anzahl der Kugeln 18 entsprechende Zahl von Nuten 21 zur führenden Einlage der Kugeln 18 angeordnet. Die Nuten 21 verlaufen in axialer Spannrichtung des Steuerschiebers 16. Der Nutgrund 22 ist nach Art einer Steuerkurve ausgerundet und tritt in Spannrichtung des Steuerschiebers 16 radial stetig nach außen. Die Schlitzung 20 des Ringelements 14 ist so breit ausgeführt, daß das Ringelement 14 unter Ausnutzung seiner Eigenfederung in die Ringnut 15 über deren Nutgrund 22 aufgeschoben werden kann. Das Ringelement 14 federt in ungespreiztem Zustand durch Eigenfederung in seine Eintauchstellung in der Ringnut 15 zurück. Auf seinem Umfang sind gleichmäßig verteilt drei Umfangsabschnitte 23 mit den inneren Keilflächen 9 angeordnet. Der mittlere Umfangsabschnitt 23 liegt der Schlitzung 20 diametral gegenüber. Die beiden äußeren Umfangsabschnitte 23 liegen in gleichem Abstand neben der Schlitzung 20. Die Querschnittsstärke des Ringelements 14 ist im Bereich der Zwischenräume zwischen den Umfangsabschnitten 23 bzw. den inneren Keilflächen 9 geschwächt, um das Auffedern des Ringelements zu ermöglichen bzw. zu erleichtern.

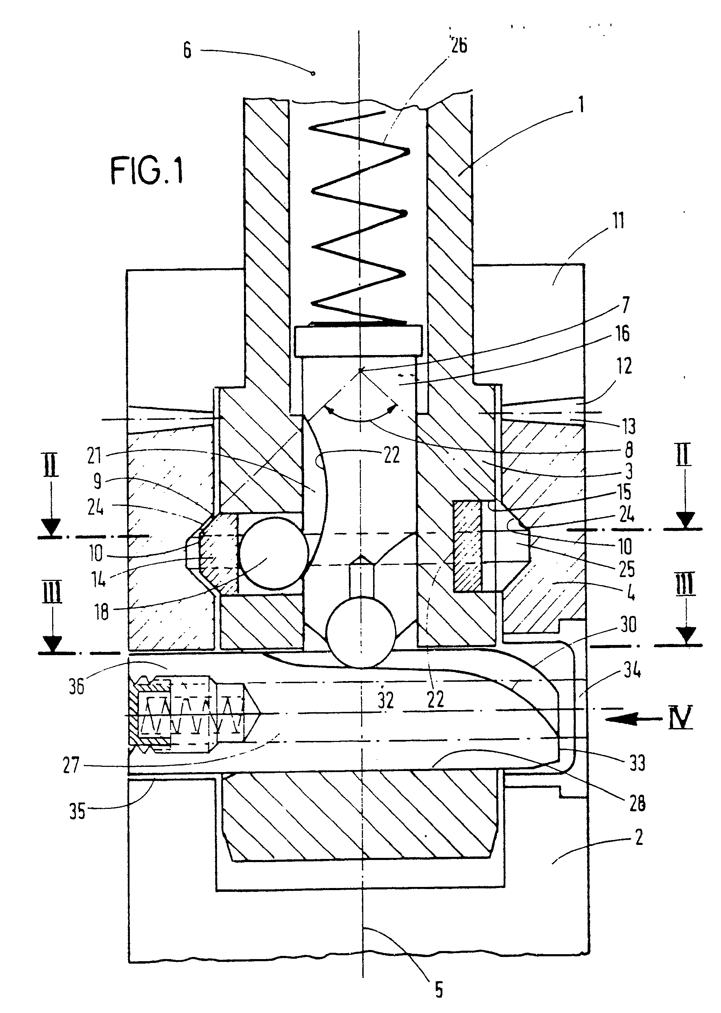

Die der Werkzeugkopfhülse 4 zugeordneten Keilflächen sind durch die konusartige Flanke 24 einer in den Innenumfang der Kopfhülse eingebrachten Innenringnut 25 gebildet. Die inneren Keilflächen 9, d.h. die den Umfangsabschnitten 23 zugeordneten Keilflächen des Ringelements 14 bilden Teile eines Kegelmantels, der hinsichtlich seiner wesentlichen Abmessungen mit der konischen Flanke 24 der Innenringnut 25 korrespondiert. Der Steuerschieber 16 ist gegen den Druck der Rückstellfeder 26 durch den in radialer Richtung verstellbaren Steuerkeil 27 verschiebbar. Der Steuerkeil 27 ist durch die Werkzeugkopfhülse 4 hindurchragend in die radiale Bohrung 28 der Werkzeugspindel 1 bzw. des Spindelendes 3 eingesteckt. Der Steuerkeil 27 trägt an seiner dem Steuerschieber 16 zugewandten Flanke 29 die Steuerfläche 30. Sie ist durch den Grund einer Führungsnut 31 für eine Kugel 32 gebildet, die in das Ende des Steuerschiebers 16 eingebettet ist. Die radiale Bohrung 28 ist eine Durchtrittsöffnung, durch die der Steuerkeil 27 hindurchreicht. Der Steuerkeil 27 steht außer körperlichem Kontakt mit der Werkzeugkopfhülse 4. Die Steuerfläche 30 hat einen S-förmigen Verlauf. Im Anzugsbereich (Fig. 1) gegenüber dem Steuerschieber 16 weist sie einen zur Spitze 33 des Steuerkeils hin geneigten Verlauf auf, wobei der Keilwinkel etwa 2° beträgt und somit selbsthemmend ist. Die Spitze 33 des Steuerkeils 27 liegt in Keilanzugsstellung in einer nach außen durch die Kappe 34 verschlossenen Ausnehmung der Werkzeugkopfhülse 4 ein.

Zur festen Verbindung des Werkzeugkopfes 2 mit der Maschinenspindel 1 wird die Werkzeugkopfhülse 4 auf das Spindelende 3 aufgeschoben. Dabei greift die Hirth-Verzahnung 12,13 beider Teile zur Herstellung einer drehfesten Verbindung zwischen den Werkzeugkopf 2 und der Maschinenspindel 1 ineinander. Der Steuerschieber 16 ist durch die Rückstellfeder 26 in eine Stellung gedrückt, in welcher die Kugeln 18 durch die radial einwärts gerichtete, federnde Rückstellkraft des Ringelements 14 an die der Spindelachse 5 nächsten Bereiche ihrer Nut 21 gedrückt sind. Dadurch steht das Ringelement 14 mit seinen die inneren Keilflächen 9 tragenden Umfangsabschnitten 23 nicht über den Umfang des Spindelendes 3 radial nach außen hinaus, so daß sie die vorgenannte Aufschiebebewegung nicht behindern. Die Hirth-Verzahnung 12,13 kann beispielsweise durch die Auslassung eines Zahnes so ausgebildet sein, daß der Werkzeugkopf 2 lediglich in einer ganz bestimmten Drehstellung auf die Maschinenspindel 1 aufschiebbar ist. In dieser Drehstellung fluchtet die radiale Durchtrittsöffnung 35 im Werkzeugkopf 2 mit der Bohrung 28, so daß der Steuerkeil 27 in seine Wirkstellung radial entgegen der Pfeilrichtung IV eingeführt werden kann. Dabei gleitet die Kugel 32 des Steuerschiebers 16 auf der Steuerfläche 30 des Steuerkeils 27 und schiebt den Steuerschieber 16 nach oben. Dabei drängen die Nuten 21 des Steuerschiebers 16 jeweils mit ihrem radial stetig nach außen tretenden Nutgrund 22 die Kugeln 18 radial nach außen. Sie wirken unmittelbar von innen auf die Umfangsbereiche 23 mit den inneren Keilflächen 9. Die inneren Keilflächen 9 treten dabei in Berührungskontakt mit den äußeren Keilflächen 10 bzw. der konischen Flanke 24 der Innenringnut 25 und drängen dabei den Werkzeugkopf 2 in die Hirth-Verzahnung 12,13 mit der Maschinenspindel 1. Die Anlage des Steuerschiebers 16 erfolgt dabei im selbsthemmenden Bereich der Steuerfläche 30. Der Steuerkeil 27 taucht vollständig in die Durchtrittsöffnung 35 des Werkzeugkopfes 2 ein. Um den Steuerkeil 27 wieder entfernen zu können, kann ein Ausziehwerkzeug in die im normalen Betrieb verschlossene Gewindeöffnung 36 am Kopf des Steuerkeils 27 eingreifen.

Wenn der Steuerkeil 27 in Pfeilrichtung IV aus der Durchtrittsöffnung 35 wieder herausgezogen wird, schiebt die Rückstellfeder 26 den Steuerschieber 16 nach unten. Diese Rückstellbewegung wird durch die radial nach innen gerichtete Eigenfederwirkung des Ringelements 14 unterstützt. Die Umfangsbereiche 23 treten aus der Innenringnut 25 aus. Die inneren Keilflächen 9 geben die äußeren Keilflächen 10 bzw. die Flanke 24 der Innenringnut 25 frei mit der Folge, daß der Werkzeugkopf 2 von der Maschinenspindel 1 abgezogen werden kann.

Bezugszeichenliste

1 Maschinenspindel
2 Werkzeugkopf
3 Spindelende
4 Werkzeugkopfhülse
5 Spindelachse

6 Maschinenseite
7 Scheitel
8 Winkel
9 innere Keilfläche
10 äußere Keilfläche
11 Flansch
12 Hirth-Verzahnung
13 Hirth-Verzahnung
14 Ringelement
15 Ringnut
16 Steuerschieber
17 Öffnung
18 Kugel
19 Innenringwand
20 Schlitzung
21 Nut
22 Nutgrund
23 Umfangsabschnitt
24 Flanke
25 Innenringnut
26 Rückstellfeder
27 Steuerkeil
28 Bohrung
29 Flanke
30 Steuerfläche
31 Führungsnut
32 Kugel
33 Spitze
34 Kappe
35 Durchtrittsöffnung
36 Gewindeöffnung

## Ansprüche

**1.** Schnellwechsel-Einspannvorrichtung insbesondere für Bohrmaschinen
- mit einer Maschinenspindel (1) und
- mit einem in Axialrichtung auf das Spindelende (3) drehfest aufsetzbaren Werkzeugkopf,
  - wobei am Spindelende (3) und an der dieses umgebenden Werkzeugkopfhülse (4) jeweils einen spitzen, sich zur Maschinenseite (6) hin schließenden, mit seinem Scheitel (7) etwa auf der Spindelachse (5) liegenden Winkel (8) bildende innere und äußere Keilflächen (9,10) radial neben der Spindelachse (5) angeordnet sind,
    - die in radialer Richtung miteinander verspannbar sind und dadurch in axialer Richtung Werkzeugkopf (2) und Spindelende (3) gegeneinander pressen,

    dadurch gekennzeichnet,
- daß die radial inneren Keilflächen (9) am Umfang eines spreizbaren Ringelements (14) angeordnet sind,
  - das im ungespreizten Zustand in einer das Spindelende (3) umgebenden Ringnut (15) eingetaucht einliegt,
- daß in der Spindel (1) ein Steuerschieber (16) durch eine von außen eingeleitete Verstellbewegung in Axialrichtung verschiebbar gelagert ist und
- daß mehrere Spreizelemente in das Spindelende (3) radial durchsetzenden und in die Ringnut (15) ausmündenden Öffnungen (17) einliegen,
  - die durch Axialverschiebung des Steuerschiebers (16) radial nach außen gegen die Innenringwand (19) des Ringelementes (14) bzw. gegen die inneren Keilflächen (9) gedrängt werden.

**2.** Einspannvorrichtung nach Anspruch 1, dadurch gekennzeichnet, daß die Spreizelemente Kugeln (18) sind.

**3.** Einspannvorrichtung nach Anspruch 1 oder 2, dadurch gekennzeichnet, daß auf dem Umfang des Steuerschiebers (16) Nuten (21) zur führenden Einlage der Kugeln (18) angeordnet sind,
- deren Nutgrund (22) in axialer Spannrichtung des Steuerschiebers (16) nach Art einer Steuerkurve stetig radial nach außen tritt.

**4.** Einspannvorrichtung nach einem oder mehreren der vorhergehenden Ansprüche, dadurch gekennzeichnet, daß das Ringelement (14) in ungespreiztem Zustand durch Eigenfederung in seine Eintauchstellung in der Ringnut (15) zurückfedert.

**5.** Einspannvorrichtung nach einem oder mehreren der vorhergehenden Ansprüche, dadurch gekennzeichnet, daß auf dem Umfang des Ringelementes (14) gleichmäßig verteilt drei Umfangsabschnitte (23) mit den inneren Keilflächen (9) angeordnet sind.

**6.** Einspannvorrichtung nach Anspruch 5, dadurch gekennzeichnet, daß das Ringelement (14) eine zwischen zwei Keilflächen (9) liegende Schlitzung (20) aufweist und daß im übrigen seine Querschnittsstärke im Bereich der Zwischenräume zwischen seinen Keilflächen (9) geschwächt ist.

**7.** Einspannvorrichtung nach einem oder mehreren der vorhergehenden Ansprüche,

dadurch gekennzeichnet,
daß die der Werkzeugkopfhülse (4) zugeordneten Keilflächen durch die konusartige Flanke (24) einer in den Innenumfang der Werkzeugkopfhülse (4) eingebrachten Innenringnut (25) gebildet sind.

**8.** Einspannvorrichtung nach einem oder mehreren der vorhergehenden Ansprüche,
dadurch gekennzeichnet,
daß die inneren Keilflächen (9) des Ringelements (14) Teile eines fiktiven Kegelmantels bilden, der hinsichtlich seiner wesentlichen Abmessungen mit der Konusflanke (24) der Innenringnut (25) korrespondiert.

**9.** Einspannvorrichtung nach einem oder mehreren der vorhergehenden Ansprüche,
dadurch gekennzeichnet,
daß der Steuerschieber (16) gegen den Druck einer Rückstellfeder (26) durch einen in radialer Richtung verstellbaren Steuerkeil (27) verschiebbar ist.

**10.** Einspannvorrichtung nach Anspruch 9,
dadurch gekennzeichnet,
daß der Steuerkeil (27) durch die Werkzeugkopfhülse (4) hindurchragend in eine radiale Bohrung (28) der Werkzeugspindel (1) eingesteckt ist und an seiner dem Steuerschieber (16) zugewandten Flanke (29) die Steuerfläche (30) trägt.

**11.** Einspannvorrichtung nach einem oder mehreren der vorhergehenden Ansprüche,
dadurch gekennzeichnet,
daß die radiale Bohrung (28) eine Durchtrittsöffnung ist, durch die der Steuerkeil (27) hindurchreicht.

**12.** Einspannvorrichtung nach Anspruch 10 oder 11,
dadurch gekennzeichnet,
daß der Steuerkeil (27) außer körperlichem Kontakt mit der Werkzeugkopfhülse (4) steht.

**13.** Einspannvorrichtung nach einem oder mehreren der vorhergehenden Ansprüche,
gekennzeichnet durch
einen selbsthemmenden Keilwinkel der Steuerfläche (30).

**14.** Einspannvorrichtung nach einem oder mehreren der vorhergehenden Ansprüche,
dadurch gekennzeichnet,
daß die Spitze (33) des Steuerkeils (27) in Keilanzugstellung in einer nach außen verschlossenen Ausnehmung der Werkzeugkopfhülse (4) einliegt.

**15.** Einspannvorrichtung nach Anspruch 9 oder 10,
dadurch gekennzeichnet,
daß der Steuerschieber an seiner Flanke mit einer in Axialrichtung verlaufenden Führungsnut (31) für eine Kugel (32) versehen ist, die in das Ende des Steuerschiebers (16) eingebettet ist.

## Claims

**1.** Rapid-release chucking device in particular for drilling machines, having a machine spindle (1) and a tool head which can be mounted on the spindle end (3) in the axial direction in such a way as to be secure against rotation, inner and outer wedge faces (9, 10) being arranged radially next to the spindle axis (5) at the spindle end (3) and at the tool-head sleeve (4) surrounding the latter, which inner and outer wedge faces (9, 10) in each case form an acute angle (8) closing towards the machine side (6) and lying with its vertex (7) approximately on the spindle axis (5) and can be clamped to one another in the radial direction and thereby press tool head (2) and spindle end (3) against one another in the axial direction, characterised in that the radially inner wedge faces (9) are arranged on the periphery of a spreadable ring element (14) which, in the unspread state, lies in a sunken position in an annular groove (15) surrounding the spindle end (3), in that a control slide (16) is mounted in the spindle (1) in such a way as to be displaceable in the axial direction by an adjusting movement introduced externally, and in that a plurality of spreading elements lie in openings (17) passing radially through the spindle end (3) and leading into the annular groove (15), which spreading elements are thrust by axial displacement of the control slide (16) radially outwards against the inner annular wall (19) of the ring element (14) or against the inner wedge faces (9).

**2.** Chucking device according to Claim 1, characterised in that the spreading elements are balls (18).

**3.** Chucking device according to Claim 1 or 2, characterised in that grooves (21) for guiding the balls (18) in place are arranged on the periphery of the control slide (16), the groove root (22) of which grooves (21), in the axial clamping direction of the control slide (16), run out continuously and radially like a radial cam.

4. Chucking device according to one or more of the preceding claims, characterised in that, due to inherent resilience, the ring element (14) in the unspread state springs back into its sunken position in the annular groove (15).

5. Chucking device according to one or more of the preceding claims, characterised in that three peripheral sections (23) having the inner wedge faces (9) are arranged in a uniformly distributed manner on the periphery of the ring element (14).

6. Chucking device according to Claim 5, characterised in that the ring element (14) has a slit (20) lying between two wedge faces (9), and in that, in addition, its cross-sectional thickness is weakened in the area of the intermediate spaces between its wedge faces (9).

7. Chucking device according to one or more of the preceding claims, characterised in that the wedge faces allocated to the tool-head sleeve (4) are formed by the cone-like flank (24) of an inner annular groove (25) made in the inner periphery of the tool-head sleeve (4).

8. Chucking device according to one or more of the preceding claims, characterised in that the inner wedge faces (9) of the ring element (14) form parts of an imaginary envelope of a cone which, with regard to its essential dimensions, corresponds to the cone flank (24) of the inner annular groove (25).

9. Chucking device according to one or more of the preceding claims, characterised in that the control slide (16) can be displaced against the pressure of a restoring spring (26) by a control wedge (27) adjustable in the radial direction.

10. Chucking device according to Claim 9, characterised in that the control wedge (27) is inserted into a radial bore (28) of the tool spindle (1) so as to project through the tool-head sleeve (4) and has the control face (30) on its flank (29) facing the control slide (16).

11. Chucking device according to one or more of the preceding claims, characterised in that the radial bore (28) is a passage opening through which the control wedge (27) extends.

12. Chucking device according to Claim 10 or 11, characterised in that the control wedge (27) is not in physical contact with the tool-head sleeve (4).

13. Chucking device according to one or more of the preceding claims, characterised by a self-locking wedge angle of the control face (30).

14. Chucking device according to one or more of the preceding claims, characterised in that the tip (33) of the control wedge (27) lies in a recess of the tool-head sleeve (4) in the tightening position of the wedge, which recess is closed to the outside.

15. Chucking device according to Claim 9 or 10, characterised in that the control slide is provided on its flank with a guide groove (31), running in the axial direction, for a ball (32) which is embedded in the end of the control slide (16).

## Revendications

1. Dispositif de fixation à changement rapide, notamment pour perceuses
comprenant :
   - une broche de machine (1) et
   - une tête d'outil qui peut être emboîtée axialement sur l'extrémité (3) de la broche pour en être solidaire en rotation,
     - dans lequel il est prévu, respectivement sur l'extrémité (3) de la broche et sur la douille (4) de la tête de l'outil qui entoure cette extrémité, des surfaces inclinées intérieure et extérieure (9, 10), radialement à proximité de l'axe (5) de la broche, qui forment chacune un angle aigu (8) qui se ferme vers la machine (6) et dont le sommet (7) se trouve à peu près sur l'axe (5) de la broche,
       - surfaces qui peuvent être pressées l'une contre l'autre dans la direction radiale et pressent alors la tête (2) de l'outil et l'extrémité (3) de la broche l'une contre l'autre dans la direction axiale,
       caractérisé
   - en ce que les surfaces inclinées radialement intérieures (9) sont disposées sur la périphérie d'un élément annulaire expansible (14),
     - qui, à l'état non expansé, est immergé dans une gorge annulaire (15) qui entoure l'extrémité (4) de la broche,
   - en ce que, dans la broche (1) est monté coulissant un poussoir de commande (16) qui peut coulisser dans la direction axiale sous l'effet d'un mouvement de déplacement introduit de l'extérieur, et

- en ce que plusieurs éléments écarteurs sont logés dans des ouvertures (17) qui traversent radialement l'extrémité (3) de la broche et débouchent dans la gorge annulaire (15)
  - éléments écarteurs qui, sous l'effet d'une translation axiale du poussoir de commande (16), sont repoussés radialement vers l'extérieur contre la paroi annulaire intérieure (19) de l'élément annulaire (14) ou contre les surfaces inclinées intérieures (9).

**2.** Dispositif de serrage selon la revendication 1, caractérisé en ce que les éléments écarteurs sont des billes (18).

**3.** Dispositif de serrage selon la revendication 1 ou 2, caractérisé en ce que, sur la périphérie du poussoir de commande (16), sont formées des rainures (21) servant de logement de guidage pour les billes (18),

- rainures dont le fond (22) se relève progressivement radialement vers l'extérieur dans la direction de serrage axial du poussoir de commande (16), à la façon d'une came.

**4.** Dispositif de serrage selon une ou plusieurs des revendications précédentes, caractérisé en ce qu'à l'état non dilaté, l'élément annulaire (14) revient élastiquement, par son élasticité propre, dans sa position d'immersion dans la gorge annulaire (15).

**5.** Dispositif de serrage selon une ou plusieurs des revendications précédentes, caractérisé en ce que trois segments (23) de la circonférence qui portent des surfaces inclinées intérieures (9) sont répartis uniformément sur la circonférence de l'élément annulaire (14).

**6.** Dispositif de serrage selon la revendication 5, caractérisé en ce que l'élément annulaire (14) présente une fente (20) qui se trouve entre deux surfaces inclinées (9), et en ce que, du reste, son épaisseur de section est affaiblie dans la région des intervalles entre ces surfaces inclinées (9).

**7.** Dispositif de serrage selon une ou plusieurs des revendications précédentes, caractérisé en ce que les surfaces inclinées portées par la douille (4) de la tête d'outil sont formées par le flanc conique (24) d'une gorge annulaire intérieure (25) ménagée dans la circonférence intérieure de la douille (4) de la tête d'outil.

**8.** Dispositif de serrage selon une ou plusieurs des revendications précédentes, caractérisé en ce que les surfaces inclinées intérieures (9) de l'élément annulaire (14) forment des parties d'une surface conique fictive qui correspond au flanc conique (24) de la gorge annulaire intérieure (25) sous l'aspect de ses dimensions principales.

**9.** Dispositif de serrage selon une ou plusieurs des revendications précédentes, caractérisé en ce que le poussoir de commande (16) peut être déplacé en translation à l'encontre de la pression d'un ressort de rappel (26) par une clavette de commande (27) qui peut se déplacer dans la direction radiale.

**10.** Dispositif de serrage selon la revendication 9, caractérisé en ce que la clavette de commande (27) est enfilée, au travers de la douille (4) de la tête d'outil, dans un perçage radial (28) de la broche porte-outil (1) et porte la surface de commande (30) sur son flanc (29) dirigé vers le poussoir de commande (16).

**11.** Dispositif de serrage selon une ou plusieurs des revendications précédentes, caractérisé en ce que le perçage radial (28) est une ouverture de passage à travers laquelle la clavette de commande (27) est enfilée et qu'elle traverse.

**12.** Dispositif de serrage selon la revendication 10 ou 11, caractérisé en ce que la clavette de commande (27) est hors de contact physique avec la douille (4) de la tête de l'outil.

**13.** Dispositif de serrage selon une ou plusieurs des revendications précédentes, caractérisé par une pente de rampe auto-bloquante de la surface de commande (30).

**14.** Dispositif de serrage selon une ou plusieurs des revendications précédentes,

caractérisé
en ce que, dans la position de tirage de la clavette, la pointe (33) de la clavette de commande (27) est enfermée dans un évidement de la douille (4) de la tête de l'outil qui est fermée vers l'extérieur.

**15.** Dispositif de serrage selon la revendication 9 ou 10,
caractérisé
en ce que le poussoir de commande est muni, sur son flanc, d'une rainure de guidage (31) s'étendant dans la direction axiale, destinée à recevoir une bille (32) qui est encastrée dans l'extrémité du poussoir de commande (16).

FIG.1
6
26
1
11
7
16
12
13
8
3
15
24
10
25
4
30
34
IV
33
28
2
5
35
27
36
32
22
II
III
21
9
24
10
14
18
22

3
27
2
3
FIG. 3

19
14
17
9
23
3
18
9
22
20
23
FIG. 2
18
9
17
19
16
17
18
23

30
31
29
27
28
FIG. 4